**Europäisches Patentamt**

**European Patent Office**

**Office européen des brevets**

(11) Numéro de publication: **0 025 384**
**B1**

## FASCICULE DE BREVET EUROPEEN

(45) Date de publication du fascicule du brevet:
**17.11.88**

(51) Int. Cl.⁴: **B 64 B 1/00**, E 04 H 7/14

(21) Numéro de dépôt: **80401236.7**

(22) Date de dépôt: **28.08.80**

(54) Conteneur à structure symétrique lobée.

(30) Priorité: **06.09.79 FR 7922303**

(43) Date de publication de la demande:
**18.03.81 Bulletin 81/11**

(45) Mention de la délivrance du brevet:
**17.11.88 Bulletin 88/46**

(84) Etats contractants désignés:
**AT BE CH DE FR GB IT LI LU NL SE**

(56) Documents cités:
**DE - A - 2 447 246**
**US - A - 331 328**
**US - A - 2 656 293**
**US - A - 2 668 634**
**US - A - 2 864 569**
**US - A - 2 919 082**
**US - A - 2 960 282**
**US - A - 3 041 013**
**US - A - 3 182 932**
**US - A - 3 391 883**
**US - A - 3 531 064**
**US - A - 3 773 279**
**US - A - 4 113 206**

**CHEMICAL ENGINEERING, Septembre 1951, no. 12,**
**page 220 "14 Lobes Make a Big Sphere"**

(73) Titulaire: **CENTRE NATIONAL D'ETUDES SPATIALES,**
**129, Rue de l'Université, F-75007 Paris (FR)**

(72) Inventeur: **Rougeron, Michel, 17, Allée des Soupirs,**
**F-31000 Toulouse (FR)**
Inventeur: **Simon, Jacques, Avenue du Souleilla,**
**Vigoulet-Auzil F-31320 Castanet (FR)**

(74) Mandataire: **de Boisse, Louis Arnaud, CABINET de**
**BOISSE 37, Avenue Franklin D. Roosevelt, F-75008 Paris**
**(FR)**

ACTORUM AG

## Description

L'invention concerne des conteneurs sous pression à structure symétrique lobée destinés en particulier à des gaz ou des liquides.

On connaît des conteneurs à structure symétrique de forme sphérique ou sensiblement sphérique qui, selon leur utilisation, peuvent être formés d'une peau d'un matériau souple et résistant, comme l'enveloppe utilisée dans les aérostats ou d'une coque d'un matériau rigide et résistant, comme dans les réservoirs sphériques destinés à contenir des gaz sous pression ou des gaz dont la phase liquide ne peut être maintenue en équilibre que sous pression.

Dans le cas d'un aérostat et, plus particulièrement, d'un ballon pressurisé, c'est-à-dire d'un ballon dont l'enveloppe fermée est suffisamment résistante pour accepter une certaine pression et qui, par conséquent, son volume demeurant constant, est capable de voler plusieurs mois à un niveau constant, on recherche le meilleur rapport possible entre la résistance et le poids de l'enveloppe et également l'étanchéité la meilleure possible. Les buts étaient atteints jusqu'à présent avec un ballon de forme sphérique en film polyester tel que décrit dans le document «Le programme Eole» du Centre National d'Etudes Spatiales d'août 1971. L'enveloppe est formée de fuseaux en film polyester assemblés bord à bord à l'aide de rubans thermoscellables en polyester. Des calottes de même matériau ferment les pôles. L'enveloppe est maintenue dans un filet auquel est suspendue la nacelle.

Le brevet US-A-2 858 090 décrit un ballon dans lequel l'enveloppe est faite de fuseaux dont les liaisons sont renforcées par des fibres. Les extrémités inférieures des éléments de renfort dans lesquels sont noyés les fibres portent la nacelle.

Dans le cas de réservoirs destinés à contenir un gaz sous pression ou un gaz en équilibre isobare avec son liquide, la forme sphérique est choisie de manière à permettre une répartition uniforme des efforts dans la coque et un poids de coque minimum. Bien que ce dernier paramètre ne soit généralement pas d'une importance fondamentale, on a intérêt pour des applications spatiales, par exemple, à viser les mêmes buts que pour les enveloppes de ballon. Pour les applications ordinaires, la diminution du poids, donc de la matière utilisée, n'est pas à négliger. De même, on recherche la facilité de construction, et l'utilisation de matériaux aisément soudables y contribue grandement.

Un exemple d'un réservoir haute pression, décrit dans le brevet US-A-2 668 634, est constitué de segments sphériques métalliques assemblés par l'intermédiaire de diaphragmes circulaires qui servent de renforts et empêchent la déformation sous pression au détriment du poids de la coque.

L'invention a tenté de résoudre ces difficultés par la combinaison d'une répartition optimale des forces dans la peau d'un conteneur sous pression et d'une reprise des efforts, exercés par les forces de pression, par une structure particulière.

Le conteneur selon l'invention est remarquable en ce que, globalement, on minimise les contraintes circonférentielles par rapport aux contraintes méridiennes en adoptant une structure de forme sphéroïdale aplatie aux pôles. Les fuseaux sont déformés préférentiellement dans le sens méridien et reportent sur la structure particulière mentionnée plus haut la plus grande partie de la contrainte méridienne globale qu'ils seraient incapables de supporter par eux-mêmes.

Le conteneur selon l'invention, comportant une enveloppe étanche, réalisée à partir de fuseaux assemblés selon des méridiens de la structure des éléments de renfort, est remarquable en ce que pour que ledit conteneur puisse résister à une surpression interne:
- les éléments de renfort sont unidirectionnels et disposés selon des méridiens de la structure et reliés entre eux à chaque pôle;
- les fuseaux sont réalisés à partir d'un matériau qui, dans le sens longitudinal, présente un module élastique très inférieur à celui des éléments de renfort et une capacité d'allongement très supérieure à celle de ces mêmes éléments, ledit matériau étant susceptible, en mode de fonctionnement normal, de se trouver contraint un peu au-delà de sa limite élastique et de présenter de ce fait des déformations plastiques permanentes;
- les fuseaux sont découpés selon un profil tel que lors de la mise en surpression de la structure, celle-ci prenne une forme générale sphéroïdale aplatie aux pôles, l'enveloppe étanche formant alors des lobes entre les éléments de renfort unidirectionnels.

Les explications et figures données ci-après, à titre d'exemple, permettront de comprendre comment l'invention peut être réalisée.

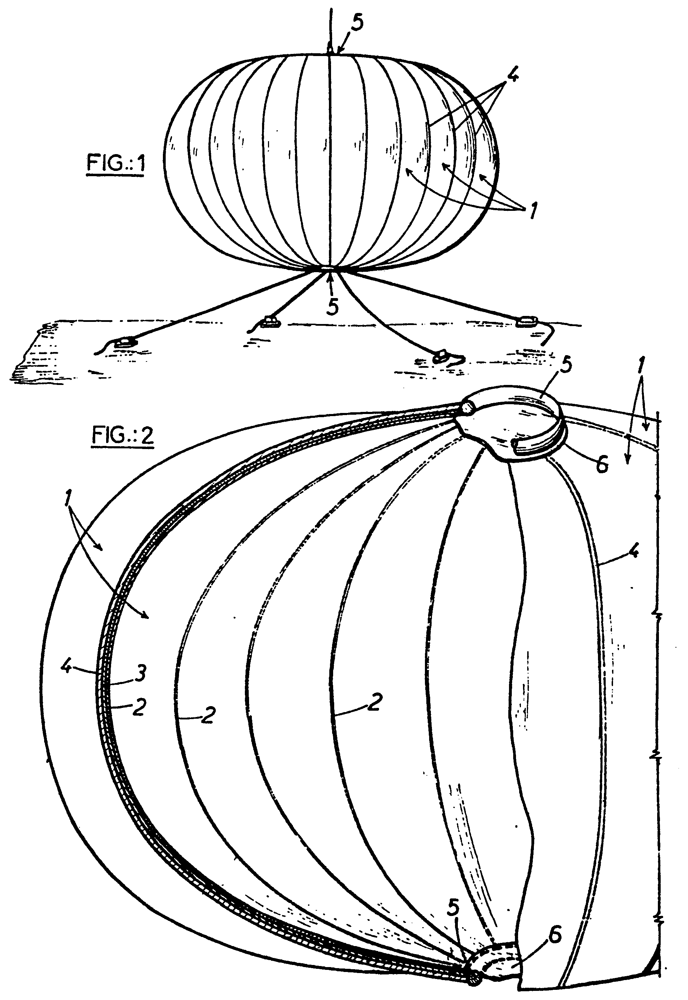

La figure 1 représente un conteneur selon l'invention; la figure 2 est une coupe partielle d'une structure au niveau d'un renfort.

Le procédé de réalisation d'un conteneur à structure symétrique lobée, telle que montrée figure 1, formée par des fuseaux 1 assemblés selon les méridiens de la structure, consiste à déformer, préférentiellement dans le sens méridien, les fuseaux, alors que l'on maintient la longueur des lignes d'assemblage inchangée, de manière que la structure présente une forme sphéroïdale aplatie aux pôles et un lobage de la peau entre les lignes d'assemblage réduisant le rayon de courbure circonférentiel.

Le mode opératoire détaillé permettant d'obtenir un conteneur à structure symétrique lobée est le suivant:
- On découpe les fuseaux dans un matériau présentant, au moins dans le sens longitudinal du découpage des fuseaux, un faible module élastique et une grande capacité d'allongement plastique;

- on préforme éventuellement les fuseaux en courbant longitudinalement leur plan;
- on assemble les fuseaux par leur bord afin d'obtenir une structure isoédrique;
- on fixe, au niveau des lignes d'assemblage des fuseaux et selon les méridiens, des éléments pratiquement monodimensionnels à haut module élastique;
- on relie entre eux les éléments à chaque pôle;
- on forme la structure lobée en créant une surpression à l'intérieur de la structure.

La figure 1 montre un exemple de réalisation dans le cas d'un ballon pressurisé. Ce ballon présente une peau formée de fuseaux 1 découpés dans des feuilles de matériau présentant un faible module élastique et une grande capacité d'allongement plastique au moins dans le sens méridien.

Sur la coupe méridienne dessinée à gauche de la figure 2, on voit que les fuseaux sont assemblés bord à bord à l'aide d'un ruban 2 de même matériau que les fuseaux et collé par thermosoudage sur les fuseaux de part et d'autre des bords 3 des fuseaux adjacents. La peau ainsi constituée peut être étanche ou rendue étanche par enduction ou grâce à une vessie souple.

Des renforts 4 sont fixés au-dessus des lignes d'assemblage par une liaison superficielle destinée à les maintenir en place avant le galbage des fuseaux. Cette liaison peut être ponctuelle. Ces renforts méridiens 4 sont constitués d'un matériau à haut module élastique, se présentant sous la forme d'éléments pratiquement unidirectionnels, tels que câbles ou sangles. Ces renforts peuvent également être réalisés en un matériau mono-orienté.

A titre d'exemple le matériau dans lequel sont découpés les fuseaux 1 et les rubans d'assemblage 2 thermosoudés peut être un complexe polyéthylène-polyester formé de polyester type «TERPHANE» entre deux couches de polyéthylène, tandis qu'avec un tel matériau on pourra utiliser des renforts méridiens 4 en fibre aramide dont la capacité d'allongement n'est qu'une petite fraction de celle du polyéthylène et du polyester.

Les extrémités des fuseaux sont soudées de manière connue sur des calottes polaires 6.

Les extrémités des éléments 4 sont fixées, par exemple par couture, sur des tores 5 en alliage léger entourant les pôles du ballon.

D'autres systèmes de maintien des extrémités des éléments unidirectionnels et/ou mono-orientés, sont possibles. Parmi ceux-ci, on peut citer, par exemple, le soudage des extrémités entre elles à chaque pôle, la réalisation d'éléments formant des boucles fermées passant par les pôles et encerclant l'enveloppe, le bobinage continu d'un élément selon les méridiens.

Lorsque le ballon est soumis à une surpression, les fuseaux sont maintenus selon leurs lignes d'assemblage par les éléments unidirectionnels 4, tandis que leurs surfaces se déforment pour former des lobes. La peau est alors contrainte de façon sensiblement uniforme à une valeur proche de sa limite élastique, tandis que les renforts sont soumis à un effort de traction égal à leur limite d'utilisation.

Dans la réalisation ci-dessus décrite, la soudure des fuseaux présente pratiquement les mêmes caractéristiques mécaniques que le fuseau lui-même. On peut toutefois, selon un autre exemple de réalisation, incorporer lors de l'assemblage des fuseaux, un élément unidirectionnel et/ou mono-orienté, dont les caractéristiques sont équivalentes à celles des renforts et éviter ainsi la présence de renforts extérieurs. Toutefois, cette technique est d'une réalisation plus délicate et n'est envisageable que dans des cas particuliers.

Selon un exemple d'application à des réservoirs pressurisés, les fuseaux sont découpés dans des tôles d'acier doux, puis courbés longitudinalement dans leur plan afin de permettre leur assemblage par soudure. On obtient alors une structure isoédrique sur les angles de laquelle on fixe des éléments unidirectionnels, câbles ou bandes, en acier à haute résistance ou en un métal à haut module élastique, tel que le titane. On injecte alors dans la structure éventuellement à chaud un fluide sous pression afin d'obtenir une déformation de peau identique à celle que l'on aura en utilisation.

Selon un autre exemple de réalisation, le matériau utilisé pour la peau est un alliage léger, les renforts pouvant être en matériaux composites à base de carbone, de bore, etc..

Les matériaux utilisés pour la réalisation du réservoir seront déterminés d'après leurs caractéristiques mécaniques et leur prix de revient.

Les avantages que présente l'invention par rapport aux techniques classiques sont mis en évidence, par exemple, en comparant un ballon sphérique classique d'un volume de 214 m$^3$ en polyester de 60 micromètres d'épaisseur et de 7,40 mètres de diamètre, pesant 19 kg, à un ballon lobé selon l'invention de même volume et de même poids.

|  | Ballon sphérique | Ballon lobé | Gain en % |
|---|---|---|---|
| Surpression maxi d'utilisation | 35 mbars | 50 mbars | 42% |
| Pression d'éclatement | 50 mbars | 75 mbars | 50% |

On voit, d'après le tableau, qu'il est possible de réaliser des structures ayant de meilleures caractéristiques ou d'obtenir des structures de plus faibles volumes éqivalentes aux structures classiques.

## Revendications

1. Conteneur à structure sphéroïdale, conçu pour résister à une pression interne comportant:
- une enveloppe étanche, possédant deux pôles et réalisée à partir de fuseaux (1) assemblés selon des méridiens de la structure;
- des éléments de renfort 4);

caractérisé en ce que pour que ledit conteneur puisse résister à une surpression interne:

- les éléments de renfort (4) sont unidirectionnels et disposés selon des méridiens de la structure et reliés entre eux à chaque pôle;
- les fuseaux sont réalisés à partir d'un matériau qui, dans le sens longitudinal, présente un module élastique très inférieur à celui des éléments de renfort et une capacité d'allongement très supérieure à celle de ces mêmes éléments, ledit matériau susceptible, en mode de fonctionnement normal, de se trouver contraint un peu au-delà de sa limite élastique et de présenter de ce fait des déformations plastiques permamentes;
- les fuseaux sont découpés selon un profil tel que lors de la mise en surpression de la structure, celle-ci prenne une forme générale sphéroïdale aplatie aux pôles, l'enveloppe étanche formant alors des lobes entre les éléments de renfort unidirectionnels.

2. Conteneur selon la revendication 1, caractérisé en ce que les extrémités des fuseaux (1) sont fixées à des calottes polaires (6).

3. Conteneur selon la revendication 1 ou 2, caractérisé en ce que les fuseaux (1) sont formés de feuilles de polymère.

4. Conteneur selon la revendiation 3, caractérisé en ce que les éléments de renfort (4) sont en polymère.

5. Conteneur selon la revendication 1 ou 2, caractérisé en ce que les fuseaux (1) et les éléments de renforts (4) sont en métal.

6. Conteneur selon la revendication 3, caractérisé en ce que la feuille de polymère est formée d'une couche centrale de polyester et de deux couches externes de polyéthylène.

7. Conteneur selon la revendication 4 ou 6, caractérisé en ce que les éléments de renfort (4) sont formés par des sangles en fibre aramide.

## Claims

1. Container of spheroidal structure designed to whithstand an internal pressure and comprising a sealed envelope having two poles and produced from gores (1) joined together along meridians of the structure, and reinforcing elements (4), characterized in that, so that the said container can withstand an internal overpressure, the reinforcing elements (4) are unidirectional and are arranged along meridians of the structure and connected to one another at each pole, the gores are produced from a material which, in the longitudinal direction, has a modulus of elasticity much lower than that of the reinforcing elements and an elongating capacity much higher than that of these same elements, the said material, in the normal operating mode, being capable of being stressed a little beyond its elastic limit and of thereby exhibiting permanent plastic deformations, and the gores are cut according to a profile which is such that, when the structure is subjected to overpressure, the latter assumes a general spheroidal shape flattened at the poles, the sealed envelope then forming lobes between the unidirectional reinforcing elements.

2. Container according to Claim 1, characterized in that the ends of the gores (1) are fastened to polar caps (6).

3. Container according to Claim 1 or 2, characterized in that the gores (1) are formed from sheets of polymer.

4. Container according to Claim 3, characterized in that the reinforcing elements (4) are made of polymer.

5. Container according to Claim 1 or 2, characterized in that the gores (1) and the reinforcing elements (4) are made of metal.

6. Container according to Claim 3, characterized in that the sheet of polymer is formed from a central layer of polyester and from two outer layers of polyethylene.

7. Container according to Claim 4 or 6, characterized in that the reinforcing elements (4) are formed by straps made of aramid fibre.

## Patentansprüche

1. Behälter in Form eines sphäroidalen Gebildes, das so ausgelegt ist, dass es einem Innendruck standhalten kann, mit:

- einer dichten Hülle, die zwei Pole aufweist und aus zwickel- oder schnitzförmigen Bahnen (1) hergestellt ist, welche entlang der Meridiane des Gebildes zusammengesetzt sind;
- Verstärkungselementen (4);

dadurch gekennzeichnet, dass, damit der Behälter einem Überdruck standhalten kann:

- die Verstärkungselemente (4) als Einrichtungselemente ausgebildet, auf den Meridianen des Gebildes angeordnet und an jedem Pol untereinander verbunden sind;
- die Bahnen aus einem Material hergestellt sind, das in Längsrichtung einen sehr viel kleineren Elastizitätsmodul als die Verstärkungselemente und eine sehr viel grössere Dehnung als diese Verstärkungselemente hat, wobei dieses Material bei normalem Gebrauch etwas über seine Elastizitätsgrenze hinaus beansprucht ist und somit bleibend plastisch verformt ist;
- die Bahnen nach einem Profil wie bei der Unterdrucksetzung des Gebildes geschnitten sind, wobei das Gebilde eine an seinen Polen abgeplattete sphäroidale Form besitzt, derart, dass die dichte Hülle Ausbauchungen zwischen den Einrichtungs-Verstärkungselementen bildet.

2. Behälter nach Anspruch 1, dadurch gekennzeichnet, dass die Enden der Bahnen (1) an polaren Kalotten (6) befestigt sind.

3. Behälter nach Anspruch 1 oder 2, dadurch gekennzeichnet, dass die Bahnen (1) aus Folien aus einem Polymer hergestellt sind.

4. Behälter nach Anspruch 3, dadurch gekennzeichnet, dass die Verstärkungselemente (4) aus einem Polymer bestehen.

5. Behälter nach Anspruch 1 oder 2, dadurch gekennzeichnet, dass die Bahnen (1) und die Verstärkungselemente (4) aus Metall bestehen.

6. Behälter nach Anspruch 3, dadurch gekennzeichnet, dass die Polymer-Folie aus einer zentralen Polyesterschicht und zwei äusseren Polyäthylenschichten hergestellt ist.

7. Behälter nach Anspruch 4 oder 6, dadurch gekennzeichnet, dass die Verstärkungselemente (4) aus Gurten aus einer Aramidfaser hergestellt sind.

FIG.:1

FIG.:2